# EUROPÄISCHE PATENTANMELDUNG

(11) **EP 1 104 948 A1**
(43) Veröffentlichungstag der Anmeldung: **06.06.2001**
(21) Anmeldenummer: 99403000.5
(22) Anmeldetag: 30.11.1999
(51) Int. Cl.: H02G 1/08

(54) **Verfahren zur Verlegung eines Kabels**

(71) Anmelder: ALCATEL, 75008 Paris (FR)
(72) Erfinder: Gregor, Paul, 46145 Oberhausen (DE); Siever, Walter, 52445 Titz (DE)
(74) Vertreter: Döring, Roger, Dipl.-Ing.

(57) **Zusammenfassung**

Bei einem Verfahren zum Verlegen eines Kabels (4) in einem Rohr (2), in welchem bereits ein Kabel (1) verlegt ist, werden auf das zu verlegende Kabel in bestimmten Abständen Abstandshalter (5) aufgesteckt. Das zu verlegende Kabel (4) wird in dem sichelförmigen Querschnitt zwischen der Rohrinnenwand und dem bereits verlegten Kabel mittels Druck verlegt wird.

## Beschreibung

Die Erfindung betrifft ein Verfahren zum Verlegen eines Kabels in einem Rohr.

Die zunehmend dichtere Trassenbelegung mit Leitungen aller Ver- und Entsorgungsarten erfordert im innerstädtischen Bereich Ausweichlösungen, die die alternative Verlegung weiterer Nachrichtenkabel erleichtern und nebenbei den oftmals engen Verkehrsraum während der Bauarbeiten möglichst wenig beeinträchtigen. Darüber hinaus sind die Kosten für die Erdverlegung von Nachrichtenkabeln bezogen auf die Gesamtkosten des Nachrichtenkabelnetzes extrem hoch.

Für die Verlegung von Nachrichtenkabeln sind in jüngerer Zeit Wasserrohrleitungen, Abwasserkanäle, Gasleitungen etc. genutzt worden (DE-A-3 001 226, EP-A-0 795 942). Die Kabel werden bei diesen neuen Verlegeverfahren in die Rohre mittels eines Zugseils eingezogen oder mit hohem Druck in die Rohre eingeblasen. Bei der Einblasmethode wird am Anfang des Kabels ein Schirm befestigt und hinter dem Schirm ein Druck aufgebaut, der den Schirm und damit das Kabel durch das Rohr treibt.

Dieses Verfahren versagt jedoch, wenn in dem Rohr bereits ein weiteres Rohr oder Kabel verlegt ist. Dann passiert es, daß das eingeblasene Rohr sich im sichelförmigen Querschnitt zwischen der Rohrinnenwand und dem bereits verlegten Substrat einklemmt. Das gleiche geschieht, wenn das Kabel in ein bereits mit einem Substrat belegten Rohr eingezogen wird.

Aus dem DE-U- 298 06 732 ist ein Leitungssystem, insbesondere ein Gasleitungssystem bekannt, mit einem Außenrohr und einem in dem Außenrohr angeordneten Innenrohr. Zwischen dem Innenrohr und dem Außenrohr verläuft ein sichelförmiger Querschnitt, in dem ein optisches Flachkabel verlegt ist.

Bei diesem Leitungssystem kann das optische Kabel nur gemeinsam mit dem Innenrohr in das Außenrohr eingezogen werden. Durch die in dem DE-U-298 06 732 beschriebene Lösung sollen Gasleitungsrohre aus Stahl, die bereits korrodiert sind, mit einem Innenrohr versehen werden, so daß das Gasleitungsnetz weiter verwendet werden kann, in dem das Gas nun durch das Innenrohr hindurchgeleitet wird.

Aufgabe der Erfindung ist es demnach, ein Verfahren bereitzustellen, mit dem es möglich ist, Kabel in Rohre einzubringen, in welchen bereits Rohre oder Kabel verlegt sind, ohne daß befürchtet werden muß, daß das Kabel sich beim Einziehen oder Einblasen festsetzt. Das Verfahren soll insbesondere einsetzbar sein in sogenannten Gasaußend ruckkabelsystemen.

Diese Aufgabe wird durch die im Anspruch 1 erfaßten Merkmale gelöst.

Durch die Erfindung wird sichergestellt, daß das Kabel beim Verlegevorgang immer dort geführt wird, wo der Abstand zwischen der Rohrinnenwand und dem bereits verlegten Substrat am größten ist. Ein Abrutschen in den sich verengenden Querschnitt des sichelförmigen Raumes mit dem daraus folgenden Einklemmen des Kabels ist somit vermieden.

Weitere vorteilhafte Ausgestaltungen der Erfindung sind in den Unteransprüchen erfaßt.

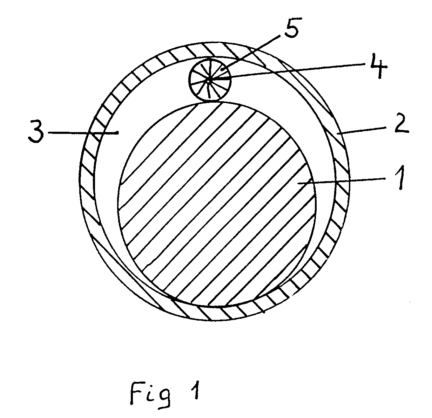

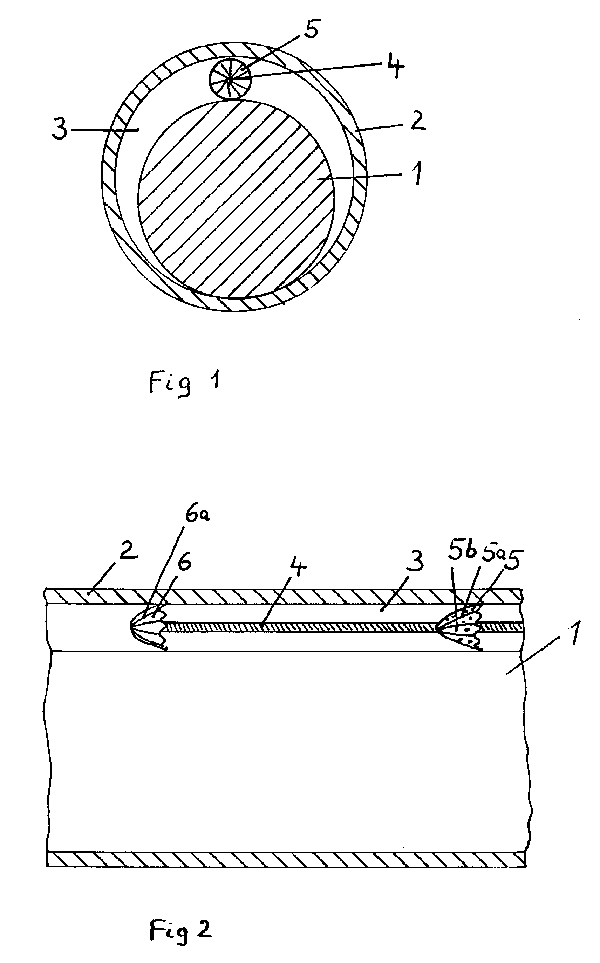

Die Erfindung ist anhand der in den Figuren 1 und 2 schematisch dargestellten Ausführungsbeispiele näher erläutert.

In Figur 1 ist ein Schnitt durch ein Gasaußendruckkabelsystem bestehend aus einem Kabel 1, einem Kabelrohr 2 sowie einem zwischen dem Kabel 1 und dem Kabelrohr 2 befindlichen Raum 3 mit sichelförmigem Querschnitt gezeigt. Der Raum 3 steht normalerweise unter einem Druck.

Um in ein solches Gasaußendruckkabelsystem ein Nachrichtenkabel, insbesondere ein optisches Kabel einbringen zu können, müssen Vorkehrungen getroffen werden, die verhindern, daß das Nachrichtenkabel in den engen Spalt zwischen der Innenwand des Kabelrohres 2 und dem Kabel 1 hereingezogen wird.

Hier setzt nun die Erfindung ein, gemäß der das Nachrichtenkabel 4 mittels Abstandshalter 5 beim Einziehen oder Einblasen in den Raum 3 stets so geführt wird, daß das Nachrichtenkabel 4 sich im oberen Bereich befindet, wo der Abstand zwischen Kabelrohr 2 und Kabel 1 am größten ist. In Bereichen, wo das Gasaußendruckkabelsystem gekrümmt verläuft bzw. um 90° umgelenkt wird, kann sich eine geringe Abweichung aus der optimalen Lage ergeben, jedoch verhindern die Abstandshalter 5 mit Sicherheit, daß das Nachrichtenkabel 4 eingeklemmt wird.

Die Abstandshalter 5 sind schirmartig ausgebildet, wobei sich die Streben 5a des Abstandshalter 5 radial nach außen federnd an der Innenwand des Kabelrohres 2 und der äußeren Oberfläche des Kabels 1 abstützen.

Die Abstandshalter 5 sind luftdurchlässig, so daß sich der Überdruck bis an den Kabelanfang ausbreiten kann.

Die Figur 2 zeigt einen seitlichen Schnitt durch das Kabelaußenrohr 2 sowie eine Ansicht des Kabels 1 sowie des in dem Raum 3 befindlichen Nachrichtenkabels 4.

Am Kabelanfang ist ein sogenannter Einblasschirm 6 befestigt, der ähnlich wie die Abstandshalter 5 ausgebildet ist, d. h. radial nach außen federnde Streben 6a aufweist. Beim Einblasschirm 6 ist zwischen den Streben 6a luftundurchlässiges Material, z. B. Leder, abriebfester, weicher Kunststoff o. ä. angeordnet, so daß beim Erzeugen von Druck hinter dem Einblasschirm 6 eine genügend große Kraft auf den Einblasschirm 6 und somit auf das Nachrichtenkabel 4 einwirkt

Bei den Abstandshaltern 5 ist zwischen den Streben 5a luftdurchlässiges Material bzw. luftundurchlässiges Material mit Löchern 5b angeordnet, so daß sich der Druck bis an den Einblasschirm 6 fortsetzen kann.

Der Abstand zwischen dem Einblasschirm 6 und dem ersten Abstandshalter 5 sowie zwischen zwei benachbarten Abstandshalter sollte im allgemeinen m nicht unterschreiten. Der Abstand wird bestimmt durch das Eigengewicht des Nachrichtenkabels 4 und durch die Streckenführung des Gasaußendruckkabelsystems.

Die Abstandshalter 5 werden seitlich auf das Nachrichtenkabel 4 aufgeklemmt und dadurch fixiert.

Bei dem Kabel 4 handelt es sich zweckmäßigerweise um ein optisches Kabel mit einem metallischen Wellmantel. Die Erfindung ist jedoch auch anwendbar, wenn zunächst ein gewelltes Rohr wie oben beschrieben verlegt und in dieses gewellte Rohr ein oder mehrere Lichtwellenleiter eingeblasen werden.

## Patentansprüche

1. Verfahren zum Verlegen eines Kabels in einem Rohr, in welchem bereits ein Kabel verlegt ist, bei dem auf das zu verlegende Kabel in bestimmten Abständen Abstandshalter aufgesteckt werden, und das zu verlegende Kabel in dem sichelförmigen Querschnitt zwischen der Rohrinnenwand und dem bereits verlegten Kabel mittels Druck verlegt wird.

2. Verfahren nach Anspruch 1, **dadurch gekennzeichnet,** daß das Kabel mittels Druckluft verlegt wird.

3. Verfahren nach Anspruch 1 oder 2, **dadurch gekennzeichnet,** daß die Abstandshalter seitlich auf das Kabel aufgesteckt werden.

4. Verfahren nach einem der Ansprüche 1 bis 3, **dadurch gekennzeichnet,** daß kugel- oder schirmförmige Abstandshalter auf das Kabel aufgesteckt werden.

5. Verfahren nach einem der Ansprüche 1 bis 4, **dadurch gekennzeichnet,** daß die Abstandshalter in einem Abstand von bis auf das Kabel aufgesteckt werden.

6. Verfahren nach einem der Ansprüche 1 bis 5, **dadurch gekennzeichnet,** daß am Kabelanfang ein luftundurchlässiger Einblasschirm befestigt wird.

7. Verfahren nach einem der Ansprüche 1 bis 6, **dadurch gekennzeichnet,** daß hinter dem Einblasschirm luftdurchlässige Abstandshalter aufgesteckt werden.

8. Verfahren nach einem der Ansprüche 1 bis 7, **dadurch gekennzeichnet,** daß zunächst ein mit Abstandshaltern und Einblasschirm versehenes gewelltes Metallrohr eingeblasen und anschließend in das gewellte Metallrohr ein oder mehrere Lichtwellenleiter eingeblasen werden.

9. Verfahren nach einem der Ansprüche 1 bis 8, **dadurch gekennzeichnet,** daß ein optisches Kabel mit gewellten Metallmantel in den sichelförmigen Querschnitt eingeblasen wird.

10. Verfahren nach einem der Ansprüche 1 bis 9, **dadurch gekennzeichnet,** daß Abstandshalter und Einblasschirm so ausgestaltet sind, daß sie in radialer Richtung ihren Durchmesser verändern können.
